# EUROPÄISCHE PATENTSCHRIFT

(11) **EP 0 935 800 B1**
(45) Veröffentlichungstag und Bekanntmachung des Hinweises auf die Patenterteilung: **27.11.2002**
(21) Anmeldenummer: 96934477.9
(22) Anmeldetag: 27.09.1996
(51) Int. Cl.: G11B 5/455

(54) **LESE- UND/ODER SCHREIBVORRICHTUNG UND VERFAHREN ZUM BETRIEB EINER SOLCHEN**
READ AND/OR WRITE DEVICE AND METHOD OF OPERATING THE DEVICE
DISPOSITIF DE LECTURE ET/OU D'ENREGISTREMENT ET PROCEDE PERMETTANT DE FAIRE FONCTIONNER UN TEL DISPOSITIF

(30) Priorität: 25.10.1995 DE 19539675
(43) Veröffentlichungstag der Anmeldung: 18.08.1999
(73) Patentinhaber: Agfa-Gevaert AG, 51373 Leverkusen (DE)
(72) Erfinder: SCHLECHTE, Manfred, D-81827 München (DE); OBERHARDT, Knut, D-83607 Föching (DE); KEUPP, Wolfgang, D-81549 München (DE); FINDEIS, Günter, D-82054 Sauerlach (DE); SCHINDLER, Hans-Georg, D-83607 Holzkirchen (DE); WEINERT, Volker, D-82024 Taufkirchen (DE); KNÖR, Bernhard, D-85635 Höhenkirchen (DE); LORENZ, Bernhard, D-85354 Freising (DE); RAUH, Hans-Jürgen, D-82064 Stra lach-Hailafing (DE)
(86) Internationale Anmeldenummer: EP9604231
(87) Internationale Veröffentlichungsnummer: WO97015918

(56) Entgegenhaltungen:
- US-A- 2 528 682
- PATENT ABSTRACTS OF JAPAN vol. 012, no. 151 (P-699), 11.Mai 1988 & JP 62 267916 A (FUJI PHOTO OPTICAL CO LTD), 20.November 1987,
- PATENT ABSTRACTS OF JAPAN vol. 013, no. 073 (P-830), 20.Februar 1989 & JP 63 257912 A (MITSUBISHI ELECTRIC CORP), 25.Oktober 1988,
- IBM TECHNICAL DISCLOSURE BULLETIN, Bd. 30, Nr. 10, März 1988, NEW YORK, US, Seiten 391-392, XP002026579 ANONYMOUS: "Digital Magnetic Encoding/Reading Head"
- MEASUREMENT SCIENCE AND TECHNOLOGY, Bd. 6, Nr. 5, 1.Mai 1995, Seiten 583-587, XP000530244 MCKEOGH L F ET AL: "A LOW-COST AUTOMATIC TRANSLATION AND AUTOFOCUSING SYSTEM FOR A MICROSCOPE"
- PATENT ABSTRACTS OF JAPAN vol. 010, no. 225 (P-484), 6.August 1986 & JP 61 061220 A (CANON INC), 29.März 1986,
- IBM TECHNICAL DISCLOSURE BULLETIN, Bd. 38, Nr. 6, Juni 1995, ARMONK, NEW YORK, US, Seiten 611-612, XP000520790 ANONYMOUS: "Magnetic Performance and Stability Test for Magnetoresistive Sensors"

## Beschreibung

Die Erfindung betrifft eine Lese- und/oder Schreibvorrichtung sowie ein Verfahren zum Betrieb einer derartigen Vorrichtung gemäß dem Oberbegriff des Anspruchs 1.

Es sind bereits fotografische Filme bekannt geworden, die mit einer magnetisierbaren Schicht versehen sind. Auf dieser Schicht können seitens des Filmherstellers, der Aufnahmekamera und/oder im Zuge nachfolgender fotografischer Filmverarbeitungsverfahren magnetisch codierte Informationen auf dem Film gespeichert werden. Sie dienen also dem Informationsaustausch zwischen Filmhersteller, Fotografen und dem Filmverarbeiter bzw. den von diesen verwendeten Geräten.

Die EP 437 536 B1 zeigt einen derartigen Film. Die Magnetschicht des Films ist dabei in verschiedene Spuren unterteilt, die jeweils einer bestimmten Datenkategorie bzw. einem bestimmten Nutzer zugeordnet sind. Beispielsweise ist vorgesehen, Spuren für die in einer Kamera aufzuzeichnenden Informationen vorzusehen. Weiter ist vorgesehen, Spuren für Filmverarbeitungsgeräte, wie Filmentwicklungsgeräte, fotografische Kopiergeräte oder dergleichen zu verwenden.

Der Informationsaustausch über die magnetische Schicht des fotografischen Films hat gegenüber unmagnetisierten Filmen z. B. den Vorteil, daß Informationen über den Aufnahmeort oder den Aufnahmetag bildweise auf den Film gespeichert werden können. Diese Informationen stehen allen Benutzern des Films jederzeit zur Verfügung. Ein weiterer Vorteil - insbesondere der Spuren der Kamera und des Filmverarbeitungsgeräts - liegt darin, daß verarbeitungsrelevante Informationen, wie z. B. die Information über eine Blitzlichtaufnahme, magnetisch speicherbar sind und beim Weiterverarbeiten des Films zur Steuerung von Geräteparametern, z. B.eines fotografischen Kopiergeräts, verwendbar sind. Dadurch können die Einstellungen der Filmverarbeitungsgeräte, z. B. die Lichtintensität beim Kopieren der Filmvorlagen, bildspezifisch genauer eingestellt werden und somit die Qualität von Fotoabzügen deutlich verbessert werden.

Die EP 589 270 A1 zeigt eine Vorrichtung, mit der Magnetspuren der o. g. Art gelesen bzw. beschrieben werden können.

Zur Nutzung der magnetisch gespeicherten Informationen hat es sich nun als wichtig erwiesen, daß die Abtastung der Magnetdaten zuverlässig erfolgt. Ein Problem der Vorrichtungen zur Abtastung der magnetischen Informationen liegt nun darin, daß sich die Lese- bzw. Schreibvorrichtung im Laufe der Zeit verschmutzt, z. B. durch Abrieb magnetischer Partikel auf dem Magnetkopf. Dies führt zu einem Verlust hinsichtlich der gelesenen bzw. geschriebenen Signalhöhe und damit zu einem potentiellen Verlust von Daten.

Die JP-A 61-61220 beschreibt ein Überprüfungsverfahren eines Magnetlesekopfes für ein Magnetband. Hier wird die Lesefunktion des Magnetkopfes anhand von Testsignalen überprüft, welche zusammen mit den Informationssignalen auf dem Magnetband aufgezeichnet wurden.

Aufgabe der Erfindung ist es, ein Verfahren zum Betrieb einer entsprechenden Lese- und/oder Schreibeinrichtung und eine derartige Lese- und/oder Schreibeinrichtung so auszugestalten, daß eine hohe Zuverlässigkeit der Lese- und/oder Schreibfunktion gewährleister werden kann.

Es ist weiterhin eine Aufgabe der Erfindung, den Signalausfall aufgrund von Störungen des Magnetkopfes weitgehend zu verhindern. Insbesondere soll verhindert werden, daß die Funktion des Magnetkopfs unbemerkt gestört ist. Dies könnte dazu führen, daß nachfolgende Verarbeitungsvorgänge für fotografischen Film, welche die gelesenen bzw. geschriebenen Magnetinformationen benötigen, falsch gesteuert werden.

Diese Aufgaben werden gelöst durch die kennzeichnenden Merkmale des Anspruchs 1 sowie die kennzeichnenden Merkmale des Vorrichtungsanspruchs 10.

Vorteilhafte Ausführungsformen der Erfindung sind Gegenstand der Unteransprüche.

Die Erfindung sieht vor, daß der Zustand des Magnetkopfs hinsichtlich seiner Lese-Schreibeigenschaften überprüft wird und daß je nach Ergebnis der Überprüfung ein vorbestimmtes Signal abgegeben wird. Durch diese Diagnose des Magnetkopfs ist sichergestellt, daß die Lese- bzw. Schreibsicherheit des Magnetkopfs gegeben ist. Sobald festgestellt wird, daß die Funktion des Magnetkopfs gestört ist, wird ein Warnsignal abgegeben, durch das entweder Fehlerbehebungsmittel, wie z. B. Reinigungsmittel an den Magnetkopf geführt werden oder der Magnetkopf durch einen neuen ersetzt wird.

Die Überprüfung der Funktionsfähigkeit des Magnetkopfs kann aufgrund eines Prüfsignals durchgeführt werden, das entweder manuell oder automatisch in zeitlich konstanten Abständen erzeugt wird. Die Überprüfung kann auch anhand anderer Kriterien durchgeführt werden, z. B. wenn eine gewisse Filmfördermenge durch die Lese- bzw. Schreibvorrichtung überschritten ist. Dazu können Fördermengen-Meßmittel vorgesehen sein.

Zur Diagnose des Magnetkopfs sind verschiedene Möglichkeiten vorgesehen. Die Diagnose kann z. B. durch eine Diagnose-Einrichtung stattfinden, welche am Magnetkopf gelesene Signale erfaßt und diese nach Rechenvorschriften in Vergleichswerte umrechnet. Sobald die Vergleichswerte vorgegebene Schwellwerte unter- oder überschreiten, kann ein Funktions-Wamsignal ausgegeben werden.

Des weiteren können die Diagnosemittel auch einen zweiten Diagnose-Magnetkopf umfassen, mit dem die Funktionstüchtigkeit des Magnetlese- bzw. Schreibkopfes überwacht wird.

Der Magnetkopf kann auch über eine Induktivitätsmessung seines Magnet-Jochs überprüft werden.

Nachfolgend werden Ausführungsbeispiele der Erfindung anhand mehrerer Figuren näher erläutert.

Es zeigen:
- Fig. 1: eine Magnetlese- bzw. Schreibvorrichtung,
- Fig. 2: eine Korrelationstabelle und
- Fig. 3: eine Diagnose-Schaltung.

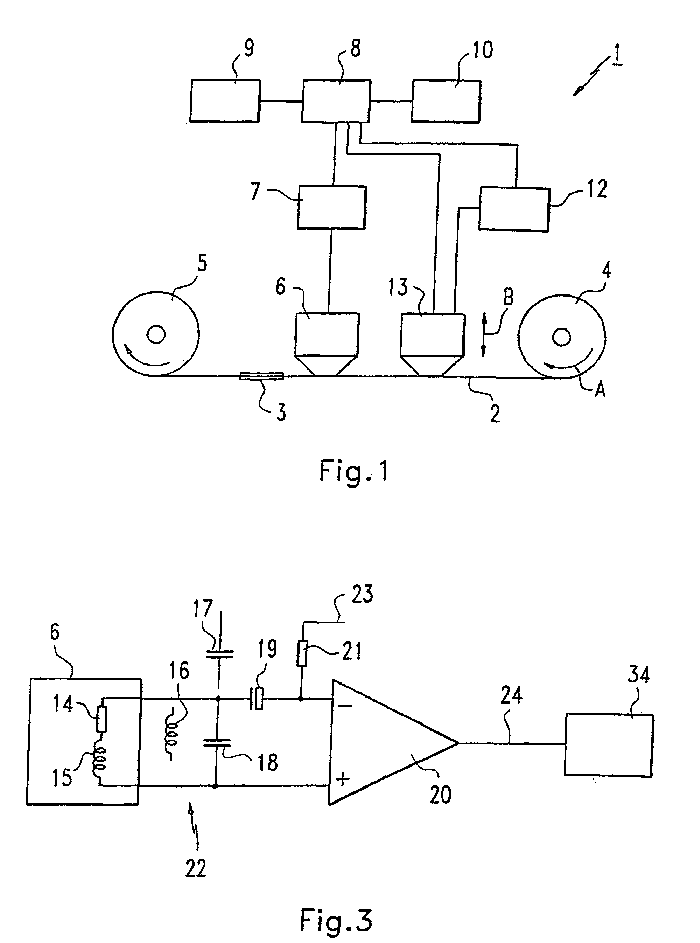

Fig. 1 zeigt eine Magnetlese- bzw. Schreibvorrichtung. Sie kann innerhalb eines größeren fotografischen Verarbeitungsgeräts, z. B. einem fotografischen Kopiergerät oder auch in einem Splicer, welcher verschiedene Einzelfilme zu einem Auftrags-Rollenband zusammenklebt, integriert sein. Ein Steuerungsrechner 8 überwacht alle Funktionen der Magnetlese- bzw. Schreibvorrichtung und des jeweiligen Verarbeitungsgeräts. Der Überwachungsrechner 8 kann über eine Ein/Ausgabe-Schnittstelle 9 mit anderen Steuerungsrechnern und/oder mit Ein/Ausgabemitteln, wie z. B. einer Tastatur, einem Bildschirm, oder einer akustischen Warneinrichtung verbunden sein.

Mit einem Magnetkopf 6 werden auf einem fotografischen Film 2 befindliche, magnetisch gespeicherte Informationen gelesen bzw. geschrieben. Der Film 2 ist hier mit einem sogenannten Spliceband 3 zusammen mit vielen anderen Filmen zu einem Verarbeitungsauftrag zusammengeklebt. Die Filme 2 werden von einer Film-Abwickelrolle 4 auf eine Aufwickelrolle 5 in Richtung A gespult. Während dieses Umspulvorgangs werden die magnetischen Informationen vom Magnetkopf 6, welcher an dem Film 2 anliegt, gelesen bzw. geschrieben. Der Magnetkopf 6 ist über eine Auswerte- und Steuerschaltung 7 mit dem Steuerungsrechner 8 verbunden.

Eine in dem Steuerungsrechner 8 befindliche Uhr gibt in zeitlich konstanten Abständen ein Überprüfungssignal ab, durch das die Diagnose der Schreib-Lesevorrichtung eingeleitet wird. Die Uhr kann an die Betriebszeit der Lese-Schreibvorrichtung 1 gekoppelt sein.

### Signalanalyse

Bei diesem Ausführungsbeispiel werden die vom Magnetkopf 6 gelesenen Daten über die Auswerteschaltung 7 an den Steuerungsrechner 8 übermittelt. Entweder in der Auswerteschaltung 7 oder im Steuerungsrechner 8 werden die vom Magnetkopf 6 ermittelten Signalhöhen jeweils gespeichert. Zur Ermittlung der Signalhöhe werden jeweils nur diejenigen Signale herangezogen, die zweifelsfrei einer Information auf dem Film 2 zuzuordnen sind und die jeweils die höchsten Signalpegel besitzen. Daten, deren Signalhöhe durch Verschmutzung oder anderer Ursachen verringert ist, fallen dadurch nicht ins Gewicht. Dadurch können die Signalhöhen sehr schnell gewonnen werden. Zur Ermittlung der Signalhöhen können verschiedene Methoden angewandt werden, z. B. aus der Höhe des Signalhubs oder des Hubs der Ableitung des Signals.

Die Stärke des am Magnetkopfs 6 ermittelten Ausgangssignals hängt nicht nur vom Verschmutzungsgrad des Magnetkopfs 6 ab, sondern auch von anderen mechanischen Faktoren, z. B. von der Stärke des Magnetfeldes beim Beschreiben des Films 2 oder auch vom Abrieb des Magnetkopfes 6 im Bereich seiner Lesezone. Es ist deshalb besonders vorteilhaft, die Tendenz der am Magnetkopf 6 gemessenen Signale, insbesondere der Maximums-Signale festzuhalten, um den Grad der Verschlechterung der Magnetkopf-Eigenschaften zu ermitteln.

Dabei ist davon auszugehen, daß sich bei einer Verschmutzung des Magnetkopfs 6 sein Ausgangssignal nur langsam und nicht sprungartig ändert. Um die tendenzielle, d. h. auf die Zeit bezogene Veränderung des Zustands des Magnetkopfs 6 festzustellen, wird die Stärke seiner Ausgangssignale jeweils über einen abgetasteten Film gemittelt und die Mittelwerte für eine bestimmte Anzahl von Filmen, z. B. von 10 Filmen, abgespeichert. Aus diesen Daten läßt sich dann ableiten, ob das Ausgangssignal sich nachhaltig verschlechtert, oder ob nur eine kurzzeitige Verschlechterung, z. B. durch kurzfristig angelagerte und wieder entfernte Schmutzpartikel eingetreten ist. Wenn über diesen Vergleich eine nachhaltige, d. h. über eine bestimmte Anzahl von Filmen anhaltend geringe Lese-bzw. Schreibleistung des Magnetkopfes 6 festgestellt wird, wird ein Alarmsignal ausgegeben. Anhand dieses Signals kann dann z. B. der Filmtransport gestoppt werden oder eine automatische Reinigung des Magnetkopfs eingeleitet werden. Es können verschiedene Alarmsignale vorgesehen sein, die je nach Leistung des Magnetkopfes 6 abgestuft sind.

Zum Feststellen des momentanen Zustands des Magnetkopfs kann der über die vorbestimmte Anzahl von Filmen errechnete Signal-Mittelwert mit einem oder mehreren Schwellwerten verglichen werden. Die Schwellwerte können z. B. in dem Datenspeicher 10 gespeichert werden. Der Vergleich der errechneten Mittelwerte mit diesen Schwellwerten kann in dem Steuerrechner 8 erfolgen.

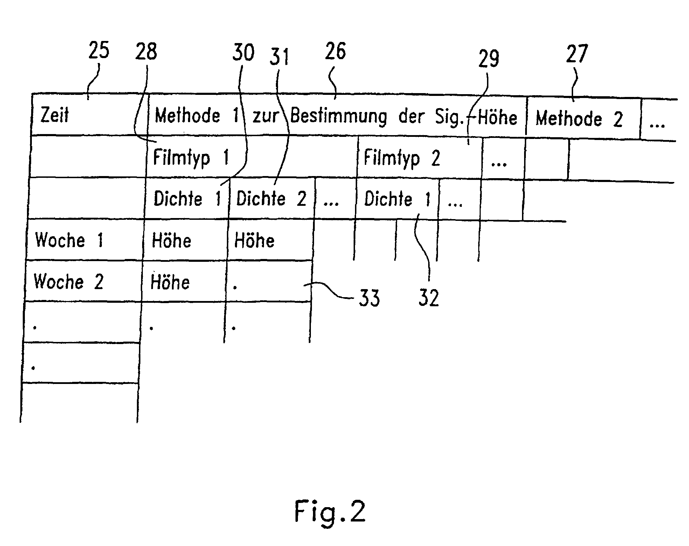

Die im Magnetkopf 6 gemessenen Signalwerte können nach einer Korrelationstabelle gemäß Fig. 2 abgespeichert werden. Diese Speicherung kann ebenfalls in dem Datenspeicher 10 erfolgen. Die ermittelten Signalhöhen werden dabei nach gewissen Kriterien sortiert. Diese Kriterien können z. B. die Art der Signalhöhenermittlung umfassen, z. B. aus dem Signalhub oder dem Hub der Ableitung des Signals. Weiterhin können die Signalhöhen klassifiziert werden nach der jeweiligen, abgetasteten Filmsorte, die einen Filmhersteller, eine Filmempfindlichkeit oder eine Filmlänge bezeichnen kann. Des weiteren können die Daten danach sortiert werden, welche Aufzeichnungsdichte auf dem Film herrscht. Schließlich kann die Sortierung auch zeitlich erfolgen. Fig. 2 veranschaulicht eine derartige Korrelationstabelle, wobei eine Zeitspalte 25 vorgesehen ist sowie Spalten 26 und 27 für verschiedene Methoden zur Bestimmung der Signalhöhe. Die Spalten 26, 27 sind wiederum unterteilt in Unterspalten 28 und 29 für verschiedene Filmtypen. Die Filmtyp-Spalten 28, 29 sind wiederum untergliedert in Spalten 30, 31 und 32 für verschiedene Datendichten. Die jeweils gemessenen Signalhöhen werden in Datenfeldern 33 abgelegt, d. h. gespeichert. Die Speicherung kann digital im entsprechend dimensionierten Datenspeicher 10 erfolgen.

Die gemessenen Diagnosedaten können von Zeit zu Zeit abgefragt werden und mit Vergleichswerten, welche ebenfalls im Datenspeicher 10 gespeichert sind, verglichen werden. Anhand geeigneter Vergleichsoperationen ist ein Erkennungsalgorithmus vorgesehen, der Auskunft gibt über den Alterungsprozeß bzw. den Funktionszustand und schlimmstenfalls den Funktionsausfall eines Magnetkopfes 6.

In dem Ausführungsbeispiel nach Fig. 1 ist ein zusätzlicher Diagnose-Magnetkopf 13 vorgesehen.

Zweckmäßigerweise ist der Magnetkopf 13 vom Film 2 entlang der Richtung B abhebbar, bzw. auf diesen aufsetzbar. Dazu dient die Verschiebeeinrichtung 12, welche vom Steuerungscomputer 8 aktivierbar ist und den Magnetkopf 13 linear senkrecht zur Filmtransportrichtung und zur Filmleseebene verschiebt.

Der Magnetkopf 13 kann als Lesekopf verwendet werden, mit dem die Funktionstüchtigkeit des Magnetkopfs 6 getestet wird. In diesem Fall sind die jeweils gemessenen Signalwerte zu gleichen Datensätzen auf dem Film 2 sehr einfach vergleichbar und anhand des Vergleichs eine direkte Aussage über den Funktionszustand des Magnetkopfes 6 möglich. Es ist selbstverständlich vorteilhaft, den Kontroll-Magnetkopf 13 in der Regel abzuheben und nur auf den Film 2 aufzusetzen, wenn der erste Magnetkopf 6 getestet werden muß.

Der Kontroll-Magnetkopf 13 kann seine Lese-bzw. Schreiboperationen statt direkt neben dem Magnetkopf 6 selbstverständlich auch an einer ganz anderen Stelle ausführen. Dies ermöglicht z. B., den Kontroll-Magnetkopf 13 in einem Stelle ausführen. Dies ermöglicht z. B., den Kontroll-Magnetkopf 13 in einem Film-Splicer anzuordnen und den Magnetkopf 6 in einem fotografischen Kopiergerät, durch das der Film 2 bei seiner Verarbeitung in einem Fotolabor erst transportiert wird, nachdem er im Splicer gemeinsam mit anderen Filmen zu einer Auftragsrolle 4 zusammengeklebt worden ist.

Es können bereits vorhandene, magnetisch auf dem Film gespeicherte Daten vom Magnetlesekopf 6 gelesen und ausgewertet werden. Diese Daten können in vorbestimmten Datenbereichen des Films abgelegt sein und beispielsweise eine Film-Identifikationsnummer oder einen Filmhersteller bezeichnen. Auch in einer Kamera aufgezeichnete Daten wie eine Kamera-ID-Nummer, Belichtungs- oder Bildformatdaten können für der Signalanalyse zugrunde gelegt werden. Zum Lesen derartiger Daten kann der Film relativ zum Magnetkopf 6 gezielt an den entsprechenden Datenbereich positioniert werden.

### Messung der Induktivität

Versuche haben ergeben, daß ein Magnetkopf 6 in der Regel dadurch seine Funktionsfähigkeit verliert, daß sein magnetisches Joch durch den Film 2 abgetragen wird. Dies führt zu einer Änderung der Induktivität des Magnetkopfes 6.

Zur Überprüfung des Funktionszustandes des Magnetkopfes 6 wird bei diesem Ausführungsbeispiel seine Induktivität über die Resonanzfrequenz eines Schwingkreises gemessen. Diese Art der Messung hat den Vorteil, daß das Meßergebnis unabhängig von der Verschmutzung des Magnetkopfes ist. Dadurch ist eine zweifelsfreie Beurteilung des Magnetkopfes hinsichtlich seines Jochzustandes möglich, insbesondere, wenn das Joch durch viele abgetastete Filme teilweise abgetragen ist.

Fig. 3 zeigt eine geeignete elektrische Schaltungsanordnung für die induktive Meßmethode. Der Magnetkopf 6, dessen innerer Widerstand 14 und innere Induktivität 15 über einen Kondensator 19 an einen Operationsverstärker 20 geführt werden, werden über Leitungen 23, 24 von einer Auswerteschaltung 34 gemessen. Der Widerstand 14 des Magnetkopfes 6 beträgt ca. R = 120 Ω, ihre Induktivität 15 L = 60 mH im betriebsfähigen, neuen Zustand. Der Schwingkreis 22 umfaßt Widerstand 14, Induktivität 15 und Kondensator 18.

Die Schwingkreis-Einkopplung kann entweder über einen Spule 16 induktiv oder über Kondensatoren 17, 18 kapazitiv erfolgen. Der Kondensator 19 vor dem Operationsverstärker 20 hat vorzugsweise eine Kapazität von 10 µF. Der Rückkoppel-Widerstand 21 des Operationsverstärkers 20 hat vorzugsweise eine Größe von 2 MΩ.

Zur Messung der Resonanzfrequenz des Schwingkreises 22 wird die Frequenz der Einkoppelstrahlung über einen Frequenzbereich und über eine vorgegebene Zeitspanne geändert. Die Auswerteschaltung 34 bestimmt dann aus diesem Frequenzbereich die aktuelle Resonanzfrequenz des Schwingkreises 22 anhand von Schwellwertkriterien und bestimmt daraus die Induktivität 15, die Kapazität 18 und/oder den Widerstand 14 des Magnetkopfs 6. Aus diesem Meßergebnis, insbesondere der Induktivität, läßt sich dann der Funktionszustand des Magnetkopfs 6 ableiten.

Es wurden verschiedene Methoden zur Überprüfung der Funktionsfähigkeit eines Magnetkopfs 6 angegeben. Selbstverständlich ist es im Rahmen des fachmännischen Könnens jederzeit möglich, naheliegende Weiterentwicklungen anzugeben. Beispielsweise kann durch geeignete Kombination der verschiedenen Analysemethoden untereinander oder mit anderen, im Stand der Technik bekannten Methoden, eine weitere Verbesserung der Funktionsüberprüfung eines Magnetkopfs erfolgen.

## Patentansprüche

1. Verfahren zum Betrieb einer Lese- und/oder Schreibeinrichtung (1) für magnetisch codierte Informationen auf einem fotografischen Film (2) mit einem Magnetkopf (6), **dadurch gekennzeichnet, dass** der Zustand des Magnetkopfes (6) hinsichtlich seiner Lese- und/oder Schreibfunktion überprüft wird, wobei gemessene Signalwerte auf dem Film befindlicher, für die Verarbeitung des Films relevanter Informationen abgespeichert, diese in Vergleichswerte umgerechnet und die Vergleichswerte über eine Anzahl von Filmen untereinander verglichen werden und je nach Ergebnis der Überprüfung ein vorbestimmtes Funktionssignal abgegeben wird.

2. Verfahren nach Anspruch 1, **dadurch gekennzeichnet, daß** die Überprüfung in zeitlich konstanten Abständen durchgeführt wird.

3. Verfahren nach Anspruch 1, **dadurch gekennzeichnet, daß** die Überprüfung aufgrund einer gemessenen Film-Fördermenge durch die Lese- und/oder Schreibeinrichtung (1) durchgeführt wird.

4. Verfahren nach Anspruch 1, **dadurch gekennzeichnet, daß** derselbe Magnetkopf (6) zum Lesen und/oder Schreiben der Informationen und zur Diagnose verwendet wird.

5. Verfahren nach Anspruch 1, **dadurch gekennzeichnet, daß** die Überprüfung mit einer Signalauswerte-Schaltung (7, 8) durchgeführt wird.

6. Verfahren nach Anspruch 5, **dadurch gekennzeichnet, daß** die Signalauswerte-Schaltung (7, 8) jeweils einen Mittelwert vorgegebener magnetischer Signale aus einer vorgegebenen Anzahl von Filmen (2) berechnet, anhand des Vergleichs zeitlich aufeinanderfolgender Mittelwerte den Gradienten der Mittelwerte berechnet und bei Über- oder Unterschreiten des Gradienten bezüglich eines vorgegebenen Gradienten-Vergleichswertes das Prüfsignal abgibt.

7. Verfahren nach Anspruch 1, **dadurch gekennzeichnet, daß** Testgrößen direkt in den Magnetkopf eingekoppelt werden.

8. Verfahren nach Anspruch 7, **dadurch gekennzeichnet, daß** die Induktivität des Magnetkopfs (6) gemessen wird.

9. Verfahren nach Anspruch 8, **dadurch gekennzeichnet, daß** die Induktivität mittels eines elektronischen Schwingkreises (22) gemessen wird, wobei eine induktive und/oder eine kapazitive Einkopplung vorgesehen ist.

10. Lese- und/oder Schreibvorrichtung (1) für magnetisch codierte Informationen auf einem fotografischen Film (2) mit einem Magnetkopf (6), **dadurch gekennzeichnet, dass** Mittel (7, 8, 13) zur Überprüfung des Zustands des Magnetkopfes (6) hinsichtlich seiner Lese- und/oder Schreibfunktion vorgesehen sind, die so aufgebaut sind, dass gemessene Signalwerte auf dem Film befindlicher, für die Verarbeitung des Films relevanter Informationen abspeicherbar und in Vergleichswerte umrechenbar sind und die Vergleichswerte über eine Anzahl von Filmen abspeicherbar und durch Vergleich untereinander auswertbar sind und je nach Ergebnis der Überprüfung ein vorbestimmtes Funktionssignal abgegeben werden kann.

11. Vorrichtung nach Anspruch 10, **dadurch gekennzeichnet, daß** ein Signalgeber vorgesehen ist, der die Überprüfungsmittel aktiviert.

12. Vorrichtung nach Anspruch 11, **dadurch gekennzeichnet, daß** die Überprüfungsmittel Mittel (7, 8) zum Vergleichen von Signalen umfassen.

13. Vorrichtung nach Anspruch 10, **dadurch gekennzeichnet, daß** Testgrößen direkt in den Magnetkopf einkoppelbar sind.

## Claims

1. Method for operating a reading and/or writing device (1) for magnetically coded information on a photographic film (2) with a magnetic head (6), **characterised in that** the state of the magnetic head (6) is checked with respect to its reading and/or writing function, wherein measured signal values of information located on the film and relevant to the processing of the film are stored, converted into comparison values and the comparison values are compared with one another over a number of films and, depending on the result of the check, a predetermined function signal is emitted.

2. Method according to claim 1, **characterised in that** the check is carried out at constant time intervals.

3. Method according to claim 1, **characterised in that** the check is carried out on the basis of a measured film conveying capacity through the reading and/or writing device (1).

4. Method according to claim 1, **characterised in that** the same magnetic head (6) is used for reading and/or writing the information and for diagnosis.

5. Method according to claim 1, **characterised in that** the check is carried out with a signal evaluation circuit (7, 8).

6. Method according to claim 5, **characterised in that** the signal evaluation circuit (7, 8) calculates a respective average of predetermined magnetic signals from a predetermined number of films (2), with the aid of the comparison of temporally successive averages calculates the gradient of the averages and emits the check signal in the event of the gradient being exceeded or not being reached with respect to a predetermined gradient comparison value.

7. Method according to claim 1, **characterised in that** test variables are injected directly into the magnetic head.

8. Method according to claim 7, **characterised in that** the inductance of the magnetic head (6) is measured.

9. Method according to claim 8, **characterised in that** the inductance is measured by means of an electronic oscillating circuit (22), an inductive and/or a capacitive input being provided.

10. Reading and/or writing device (1) for magnetically coded information on a photographic film (2) with a magnetic head (6), **characterised in that** means (7, 8, 13) for checking the state of the magnetic head (6) with respect to its reading and/or writing function are provided which are constructed such that measured signal values of information located on the film and relevant to the processing of the film can be stored and converted into comparison values and the comparison values can be stored over a number of films and can be evaluated by comparison with one another and, depending on the result of the check, a predetermined function signal can be emitted.

11. Device according to claim 10, **characterised in that** a signal transmitter activating the checking means is provided.

12. Device according to claim 11, **characterised in that** the checking means comprise means (7, 8) for comparing signals.

13. Device according to claim 10, **characterised in that** test variables can be input directly into the magnetic head.

## Revendications

1. Procédé de mise en oeuvre d'un dispositif de lecture et/ou d'écriture (1) d'informations codées magnétiquement sur un film photographique (2) comportant une tête magnétique (6), **caractérisé en ce que** l'état de fonctionnement en lecture et/ou en écriture de la tête magnétique (6) est contrôlé, les valeurs de signal mesurées d'informations qui se trouvent sur le film et qui sont pertinentes pour le traitement du film étant mémorisées, converties en valeurs de référence et les valeurs de référence étant comparées les unes aux autres sur un certain nombre de films et un signal de fonctionnement prédéfini étant délivré selon le résultat du contrôle.

2. Procédé selon la revendication 1, **caractérisé en ce que** le contrôle est effectué à intervalles de temps constants.

3. Procédé selon la revendication 1, **caractérisé en ce que** le contrôle est effectué par le dispositif de lecture et/ou d'écriture (1) sur la base d'un débit mesuré de film.

4. Procédé selon la revendication 1, **caractérisé en ce que** c'est la même tête magnétique (6) qui est utilisée pour la lecture et/ou l'écriture des informations et pour le diagnostic.

5. Procédé selon la revendication 1, **caractérisé en ce que** le contrôle est effectué au moyen d'un circuit d'exploitation du signal (7, 8).

6. Procédé selon la revendication 5, **caractérisé en ce que** le circuit d'exploitation du signal (7, 8) calcule chaque fois une valeur moyenne de signaux magnétiques donnés à partir d'un nombre donné de films (2), calcule le gradient des valeurs moyennes en s'appuyant sur des valeurs moyennes chronologiquement successives et délivre le signal de contrôle lorsque le gradient est supérieur ou inférieur à une valeur de référence de gradient prescrite.

7. Procédé selon la revendication 1, **caractérisé en ce que** des grandeurs de test sont directement introduites dans la tête magnétique.

8. Procédé selon la revendication 7, **caractérisé en ce que** l'inductance de la tête magnétique (6) est mesurée.

9. Procédé selon la revendication 8, **caractérisé en ce que** l'inductance est mesurée au moyen d'un circuit oscillant électronique (22), un couplage inductif et/ou capacitif étant prévu.

10. Dispositif de lecture et/ou d'écriture (1) d'informations codées magnétiquement sur un film photographique (2) comportant une tête magnétique (6), **caractérisé en ce qu'**il est prévu des moyens (7, 8, 13) de contrôle de l'état de fonctionnement en lecture et/ou en écriture de la tête magnétique (6), lesquels sont constitués de sorte que les valeurs de signal mesurées d'informations qui se trouvent sur le film et qui sont pertinentes pour le traitement du film puissent être sauvegardées et puissent être converties en valeurs de référence et que les valeurs de référence sur un certain nombre de films puissent être mémorisées et puissent être exploitées par comparaison les unes aux autres et de sorte qu'un signal de fonctionnement prédéfini puisse être délivré selon le résultat du contrôle.

11. Dispositif selon la revendication 10, **caractérisé en ce qu'**il est prévu un appareil transmetteur de signal qui active les moyens de contrôle.

12. Dispositif selon la revendication 11, **caractérisé en ce que** les moyens de contrôle comprennent des moyens (7, 8) de comparaison de signaux.

13. Dispositif selon la revendication 10, **caractérisé en ce que** des grandeurs de test peuvent être directement introduites dans la tête magnétique.
